# EUROPEAN PATENT SPECIFICATION

(11) **EP 2 060 176 B1**
(45) Date of publication and mention of the grant of the patent: **03.04.2013**
(21) Application number: 08020157.7
(22) Date of filing: 19.11.2008
(51) Int. Cl.: A01K 97/12

(54) **Bite detector and method of detection**
Bisserkennung und Erkennungsverfahren
Détecteur de touche et procédé de détection

(30) Priority: 19.11.2007 GB 0722600
(43) Date of publication of application: 20.05.2009
(73) Proprietor: Dynamite Baits Limited, Nottingham, NG1 6GR (GB)
(72) Inventor: Tasker, Stephen, Greensted Ongar Essex, CM6 9LD (GB); Cottis, Maxwell, Braintree Essex, CM7 9FD (GB); Grint, Paul, Gloucester Gloucestershire, GL2 2SF (GB)
(74) Representative: Lynch, Lyndsey Ann

(56) References cited:
- EP-A- 1 059 029
- GB-A- 2 222 060
- GB-A- 2 248 755
- GB-A- 2 310 351
- GB-A- 2 392 599

## Description

The present invention relates, in general, to a device and method used in angling to indicate the attention of a fish on bait. In particular, the present invention is a bite detector mechanism and method that uses an electrical generator to translate fishing line movement into an electrical signal and subsequent alerts.

Bite alarms are devices which can detect and indicate the movement and/or vibration of a fishing line in response to the attention of a fish on bait.

Previous examples of bite alarm detection techniques generally fall into two types, although other techniques including optical methods have been utilised as described in WO 2004 021777.

A first type of bite alarms is those which utilise the properties of piezoelectric materials and a second type of bite alarms is those that employ rotating magnets and hall-effect or reed switches.

Piezoelectric detectors rely on the properties of piezoelectric materials to generate an electrical voltage in response to vibration. Examples of bite alarms employing piezoelectric detectors can be found in , GB 2250901, GB 2222060 and .

The piezoelectric detectors rely on the stick-slip (static-dynamic) friction properties of a material over which a tensioned fishing line is passed. These properties are affected greatly by the size and type of line which passes over this material and also by the climatic conditions which prevail. Rain, for example, will severely decrease the static and dynamic friction coefficients. This means that sensitivity must be increased to compensate for this condition. Unfortunately however the rain, by striking the line itself, can cause the alarm to misinterpret this as a fish bite when sensitivity is accordingly increased. Moreover, the piezoelectric detector is also capable of missing line movement completely due to incorrect settings.

The method of using a rotating magnet and reed or hall-effect detectors are generally not subject to the need to adjust sensitivity for rain as they are unaffected by line type or its friction characteristics. Examples of bite alarms employing rotating magnet reed or hall-effect can be found in CA 2294256 and EP 0850562.

This method will rarely fail to detect absolute line movement but a large disadvantage is its inability to detect a fish "nibble" which manifests itself as line vibration.

There are also issues with detecting rotation direction. To enable this kind of arrangement to partially overcome the failings, two reed switches and a piezoelectric device are generally employed.

Even this combination still does not provide adequate levels of discrimination for the angler. With such a combination there can be a considerable time lag between a reed switch being activated and it being released so therefore a fundamental limit to the resolution of such a system. Line movements under about 4mm are not readily reproducible in practice.

According to a first aspect of the present invention there is therefore provided a fishing rod and line assembly comprising a bite detector mechanism comprising an actuator and electrical generator comprising a rotor, wherein, when in use, longitudinal movement of a line causes the actuator to impart rotational movement to the rotor and thereby generate an electrical signal proportional to the amplitude of the longitudinal movement of the line wherein the mechanism is coupled to the rod and the line is attached to or supported on the actuator and a tension weight is provided on the line and between the mechanism and a reel..

The present invention therefore provides a substantially instant and proportional signals relating to movement of a fishing line in either longitudinal direction by using an electric generator. The signals can be processed, with a high degree of certainty, to provide an alarm signal which can alert an angler to the attention of fish upon his bait and discriminate between a "bite", "nibble" and environmental affects such as raindrops.

The actuator is connectable to the rotor using a suitable connecting arrangement known to a person skilled in the art.

Preferably the mechanism comprises attachment means for attachment to a rod for convenience of mounting.

Preferably, the actuator is a roller having a common axis of rotation with the rotor. If a roller is used a fishing line rests on or is supported by the roller such that any longitudinal movement of the fishing line imparts a rotational movement into the rotor. The roller and rotor are mounted upon a common axle which provides a convenient package for a user.

Alternatively, the actuator can be a lever having one end attached to the rotor and at another end the means for attachment to the line. In this case the longitudinal movement of the line imparts an oscillation to the line which in turn imparts a rotational movement into the rotor. Such an arrangement can provide a different level of sensitivity than that provided by the roller.

Preferably the electrical generator comprises a dc motor. Advantageously a dc motor generates positive or negative signals depending upon the direction of rotation of the rotor. Consequently, the direction of line movement can be easily detected.

Preferably, the dc motor comprises a coreless dc motor, although the electric generator can comprise an AC motor, generator or tacho-generator. It is also preferably a 'coreless' motor of the type used in mobile phones or pagers with an eccentric weight as a silent (vibration) alarm. The coreless type provides lower friction characteristics.

Preferably, the signal is a voltage since a voltage can be readily processed in electronic hardware or converted to be processed in software.

Preferably, the electrical generator is connected to electronic circuitry comprising a signal amplification stage and a signal processing stage and the mechanism is further connected to an alarm generating stage. By processing the signal further information content can be obtained enabling discrimination between events.

Preferably, the alarm generating stage comprises any one or more of audible, visual or vibrational alarms. Such alarms can be selected from light emitting diodes, audible bleepers, vibration devices or message such as SMS message alerts.

Preferably the electronic circuitry comprises a microprocessor for enhanced functionality.

Preferably the electronic circuitry comprises a transmitter for transmitting signal information resulting from the signal processing stage to a remote receiver. In this way, a user can be remote from the angling site and still remain alert to events.

Preferably, the alarm generating stage is remote from the mechanism and the mechanism is connectable to the alarm generating stage by wireless communication.

According to a fourth aspect of the present invention, there is provided a method of detecting movement in a fishing line comprising generating an electrical signal proportional to the amplitude of longitudinal movement of the line, wherein the longitudianl movement of the line causes an actuator connected to the line to impart rotational movement to a rotor of an electrical generator connected to the rod and thereby generating the electrical signal.

Preferably the signal is a voltage and processed wherein signal processing the voltage includes determining if the amplitude of the voltage is above or below a predetermined set threshold level.

Preferably, processing the voltage includes measuring the voltage polarity and thereby determining the direction of longitudinal movement of the line.

Preferably, processing the voltage includes measuring the voltage amplitude and integrating over time and thereby determining the distance of longitudinal line movement.

Preferably, processing the signal includes measuring changes in voltage amplitude and voltage polarity over time which are indicative of vibrations on the line.

Embodiments of the present invention will now be described, by way of example only, and with reference to the accompanying drawings in which:
Figure 1 is a schematic diagram of a fishing rod and line assembly showing a bite detector in use according to a first embodiment of the invention;
Figure 2 is a schematic diagram of a fishing rod and line assembly showing a bite detector in use according to a second embodiment of the invention;
Figure 3 is a schematic diagram of a portion of the bite detector illustrated in Figure 1 and showing an actuator and electrical generator;
Figure 4 is a schematic diagram of signal processing steps according to a third embodiment of the invention; and
Figure 5 is a graphical representation of an output of the bite detector mechanism according to the present invention.

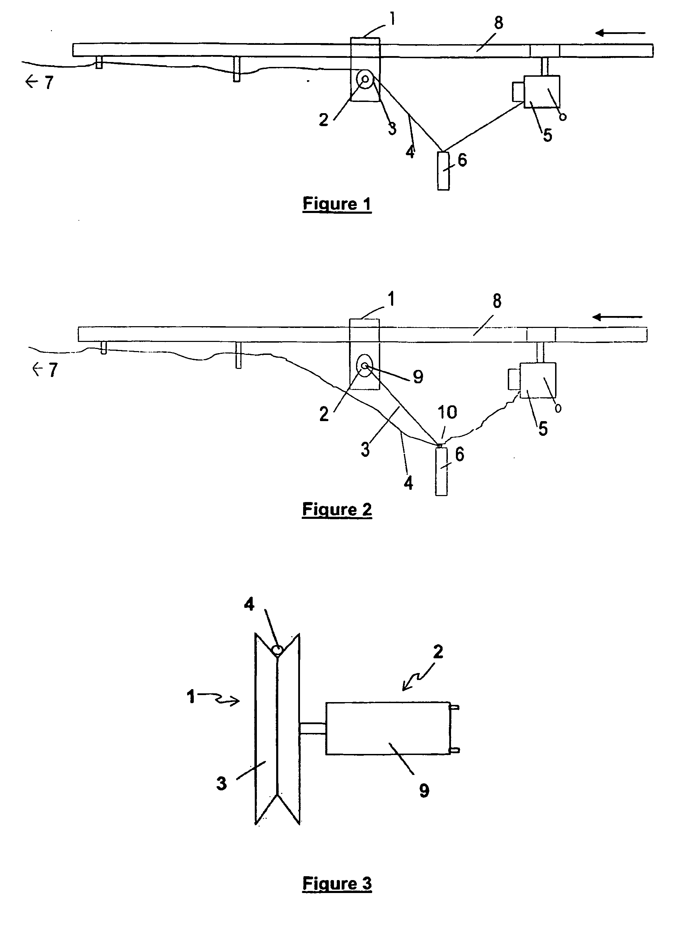

Referring to Figure 1 and according to a first embodiment of the present invention the general arrangement of a fishing rod 8 assembly comprises an attached reel 5, a bite detector 1, a line 4 and a hanger 6 to provide tension on the line. Direction arrow 7 indicates where the hook and bait (not shown in Figure 1) are located. The bite detector 1 comprises a roller 3 connected to an electrical generator 2. The detector 1 is attached to the rod 8 using a releasable fixing arrangement such as a clamp or hook (not shown).

Referring to Figure 2 and according to a second embodiment of the present invention the general arrangement of a fishing rod 8 assembly comprises an attached reel 5, a bite detector 1, a line 4 and a hanger 6 to provide tension on the line. Direction arrow 7 indicates where the hook and bait (not shown in Figure 1) are located. The bite detector 1 comprises a radial arm or lever 3 connected to an electrical generator 2.

As best seen in Figure 3, the bite detector 1 according to the first embodiment of the invention comprises the roller 3 mounted co-axially with the axis of rotation of a rotor 9 of the electrical generator 2. The line 4 runs over the roller 3 and is held on the roller 3 under tension by the hanger 6.

Thus, in operation of the bite detector 1 according to the first embodiment of the present invention, any longitudinal movement of the line 4 caused, for example, by a fish bite or rain droplet, will cause the roller 3 to rotate in either a clockwise or anticlockwise direction depending upon the movement of the line 4. The rotation of the roller 3 causes rotation of the rotor 9 also in either a clockwise or anticlockwise direction which mechanical rotation is in turn translated into a varying electrical voltage signal by the electrical generator 2.

The bite detector 1 of the second embodiment of the present invention comprises the radial arm or lever 3 connected to the electrical generator 2. The electrical generator 2 comprises a rotor 9 connected to one end of the radial arm or lever 3. The line 4 can attach securely to the other end of the radial arm or lever 3 or can be attached onto the other end of the radial arm or lever by way of an attachment 10 such as a clip. In operation of the bite detector according 1 to the second embodiment of the present invention, any longitudinal movement of the line 4 caused, for example, by a fish bite or rain droplet, will cause the radial arm or lever 3 to oscillate which causes rotation of the rotor 9 of the electrical generator 2 in either a clockwise or anticlockwise direction depending upon the movement of the line 4 which mechanical rotation is in turn translated into a varying electrical voltage signal.

Thus the mechanically driven electric generator 2 generates a voltage proportional to the angular velocity of the rotor 9 which in turn is driven proportionally to the movement of the line 4. Since the linear motion of the line cause proportionally angular motion on the rotor 9 then this in turn provides a voltage which is directly proportional to line speed.

If mathematical integration is performed on this voltage in respect of time then it is possible to measure a length of line which has passed a fixed point.

If the detector 1 is provided with a DC motor then the voltage polarity of the signal is reversed in response to a reversal of the mechanical rotation of the rotor 9. Accordingly, the detection of line direction is built automatically built in the detector 1.

Likewise, vibration manifests itself as rapid longitudinal changes in direction of the line 4, which translates using the detector 1, to rapid changes of voltage and polarity which can be detected.

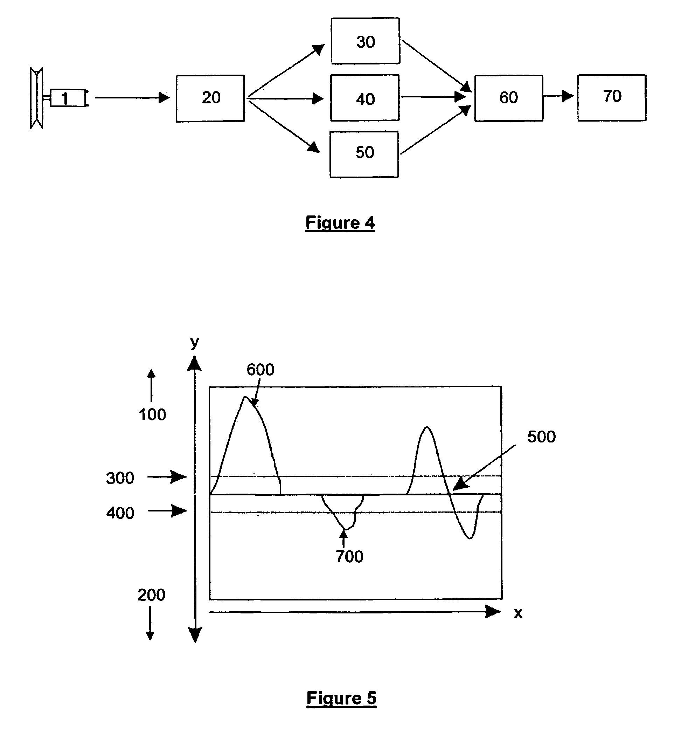

The method of translating the electrical signals into an alarm to alert an angler to the presence of a fish bite are many and varied of which at least one is described with reference to Figure 4.

A signal from the detector 1 is amplified by an amplifier 20 to generate an amplified signal using techniques well known to a person skilled in the art. The amplified signal is output and communicated to three stages.

The first stage 30 comprises of a pair of window level detectors or threshold detectors which detect the signal above a pre-set threshold level which can be positive or negative. This stage effectively is a rotation speed detector and is triggered if the rotation reaches a pre-set speed in a pre-determined time.

The second stage 40 integrates the output of the electrical generator 2 and provides a voltage whose value represents how long the rotor 3 has been rotating.

The sensitivity of the system can be altered by changing the pre-set window level detectors or threshold detectors.

The third stage 50 is a signal processing analysis of the signals coming from the first stage 40. A single detector trigger indicates simple movement in one direction whereas a double detection within a fixed time span would indicate a longitudinal transition or vibration.

The signals output from the first, second and third stage can form the basis of inputs to a microprocessor 60 which can combine these inputs in any number of configurations to the exact requirements of the angler.

The microprocessor 60 through its firmware program can provide outputs to any number of human interface devices. These may include buzzers and flashing lights provided by light emitting diodes 7.

The microprocessor 60 could also provide the basis for coded transmission to remote receivers for anglers who are away from their fishing rods.

Figure 5 is a graphic representation of the output of the detector 1. The horizontal scale X represents time and the vertical scale Y represents clockwise 100 and anticlockwise 200 rotation of the rotor 3. The window level detectors or threshold detectors are illustrated as dotted lines 300, 400 and a vibration transition is shown as 500.

Thus, a clockwise rotation 100 of the rotor 3 is illustrated as a rising peak 600 which decays over time due to the tension of the line 4. An anticlockwise rotation 200 is illustrated as a falling trough 700 which decays over time due to the tension of the line 4.

A rapidly changing oscillation 500 between states is illustrative of a vibration on the line 4, which may be indicative of a "nibble" rather than a bite.

As will be appreciated by a person skilled in the art the points at which an alarm is triggered can be varied according to the weather conditions, fishing tackle used and type of fish required. Changes to the alarm trigger can be affected by adjusting settings on either of the first 30, second 40 or third 50 stages and by adjusting the window level detectors or threshold detectors levels.

## Claims

1. A fishing rod and line assembly comprising a bite detector mechanism (1) comprising an actuator (3) and electrical generator (2) comprising a rotor (9), wherein, when in use, longitudinal movement of a line (4) causes the actuator (3) to impart rotational movement to the rotor (9) and thereby generate an electrical signal proportional to the amplitude of the longitudinal movement of the line (4) wherein the mechanism (1) is coupled to the rod and the line (4) is attached to or supported on the actuator (3) and a tension weight (6) is provided on the line (4) and between the mechanism (1) and a reel (5).

2. A fishing rod and line assembly as claimed in claim 1, wherein the actuator (3) is a roller having a common axis of rotation with the rotor (9).

3. A fishing rod and line assembly as claimed in claim 1, wherein the actuator (3) is a lever having one end attached to the rotor (9) and at another end the means for attachment to the line (4).

4. A fishing rod and line assembly as claimed in any one of the preceding claims, wherein the electrical generator (2) comprises a dc motor.

5. A fishing rod and line assembly as claimed in claim 4, wherein the dc motor comprises a coreless dc motor.

6. A fishing rod and line assembly as claimed in any one of the preceding claims, wherein the signal is a voltage.

7. A fishing rod and line assembly as claimed in any one of the preceding claims, wherein the electrical generator (2) is connected to electronic circuitry comprising a signal amplification stage and a signal processing stage and the mechanism (1) is further connected to an alarm generating stage.

8. A fishing rod and line assembly as claimed in claim 7, wherein the alarm generating stage comprises any one or more of audible, visual or vibrational alarms.

9. A fishing rod and line assembly as claimed in claim 7 or 8, wherein the electronic circuitry comprises a microprocessor.

10. A fishing rod and line assembly as claimed in any one of claims 7 to 9, wherein the electronic circuitry comprises a transmitter for transmitting signal information resulting from the signal processing stage to a remote receiver.

11. A fishing rod and line assembly as claimed in claim 10, wherein the alarm generating stage is remote from the mechanism (1) and the mechanism (1) is connectable to the alarm generating stage by wireless communication.

12. A method of detecting movement in a fishing line (4) comprising generating an electrical voltage signal proportional to the amplitude of longitudinal movement of the line (4), wherein the longitudinal movement of the line (4) causes an actuator (3) connected to the line (4) to impart rotational movement to a rotor (9) of an electrical generator (2) connected to the rod and thereby generate the electrical signal; amplifying the voltage; signal processing the voltage and measuring changes in voltage amplitude and voltage polarity over time which are indicative of vibrations on the line (4).

13. A method of detecting as claim in claim 12, comprising generating an alarm signal.

14. A method of detecting as claimed in claim 12, wherein the actuator (3) is a roller having a common axis of rotation with the rotor (9) and in response to the longitudinal movement of the line (4) the roller rotates thereby rotating the rotor (9) thereby generating the electrical signal.

15. A method of detecting as claimed in claim 12, wherein the actuator (3) is a lever having one end attached to the rotor (9) and another end attached to the line (4) and in response to the longitudinal movement of the line (4) the lever rotates the rotor (9) thereby generating the electrical signal.

16. A method of detecting as maimed in any one of claims 12 to 15, wherein the electrical generator (2) is a dc motor.

17. A method as claimed in claim 16, wherein the dc motor is a coreless dc motor.

18. A method as claimed in claim 12, wherein processing the voltage includes determining if the amplitude of the voltage is above or below a predetermined set threshold level.

19. A method as claimed in claim 12, wherein processing the voltage includes measuring the voltage polarity and thereby determining the direction of longitudinal movement of the line (4).

20. A method as claimed in claim 12, wherein processing the voltage includes measuring the voltage amplitude and integrating over time and thereby determining the distance of longitudinal line movement.

## Patentansprüche

1. Rute zum Fischen und Angelleinen-Anordnung, umfassend einen Bißermittlungs-Mechanismus (1) mit einem Antrieb (3) und einem elektrischen Generator (2) mit einem Rotor (9), wobei während des Gebrauchs die Längsbewegung einer Leine (4) den Antrieb (3) veranlaßt, den Rotor (9) in Drehung zu versetzen und dadurch ein elektrisches Signal zu erzeugen, das proportional der Amplitude der Längsbewegung der Leine (4) ist, und wobei der Mechanismus (1) mit der Rute gekoppelt ist und die Leine (4) an dem Antrieb (3) angebracht oder auf dem Antrieb (3) getragen wird und ein Spanngewicht (6) auf der Leine (4) und zwischen dem Mechanismus (1) und einer Spule (5) vorgesehen ist.

2. Rute zum Fischen und Angelleinen-Anordnung nach Anspruch 1, **dadurch gekennzeichnet, daß** der Antrieb (3) eine Rolle ist, die mit dem Rotor (9) eine gemeinsame Drehachse hat.

3. Rute zum Fischen und Angelleinen-Anordnung nach Anspruch 1, **dadurch gekennzeichnet, daß** der Antrieb (3) ein Hebel ist, der ein Ende aufweist, das an dem Rotor (9) angebracht ist, und dessen anderes Ende mit einer Einrichtung zur Befestigung an der Leine (4) versehen ist.

4. Rute zum Fischen und Angelleinen-Anordnung nach einem der vorhergehenden Ansprüche, **dadurch gekennzeichnet, daß** der elektrische Generator (2) ein Gleichstrommotor ist.

5. Rute zum Fischen und Angelleinen-Anordnung nach Anspruch 4, **dadurch gekennzeichnet, daß** der Gleichstrommotor ein kernloser Gleichstrommotor ist.

6. Rute zum Fischen und Angelleinen-Anordnung nach einem der vorhergehenden Ansprüche, **dadurch gekennzeichnet, daß** das Signal eine Spannung ist.

7. Rute zum Fischen und Angelleinen-Anordnung nach einem der vorhergehenden Ansprüche, **dadurch gekennzeichnet, daß** der elektrische Generator (2) an einen elektronischen Schaltkreis angeschlossen ist, der eine Signalverstärkerstufe und eine Signalverarbeitungsstufe aufweist, und daß der Mechanismus (1) ferner mit einer Alarmerzeugungsstufe verbunden ist.

8. Rute zum Fischen und Angelleinen-Anordnung nach Anspruch 7, **dadurch gekennzeichnet, daß** die Alarmerzeugungsstufe irgendeinen oder mehrere hörbare, sichtbare oder Vibrationsalarme erzeugt.

9. Rute zum Fischen und Angelleinen-Anordnung nach Anspruch 7 oder 8, **dadurch gekennzeichnet, daß** der elektronische Schaltkreis einen Mikroprozessor bildet.

10. Rute zum Fischen und Angelleinen-Anordnung nach einem der Ansprüche 7 bis 9, **dadurch gekennzeichnet, daß** der elektronische Schaltkreis einen Sender aufweist, der zum Senden einer Signalinformation an einen entfernt liegenden Empfänger dient, wobei die Signalinformation sich aus der Signalverarbeitungsstufe ergibt.

11. Rute zum Fischen und Angelleinen-Anordnung nach Anspruch 10, **dadurch gekennzeichnet, daß** die Alarmerzeugungsstufe von dem Mechanismus (1) entfernt liegt und der Mechanismus (1) durch drahtlose Verbindung an die alarmerzeugende Stufe anschließbar ist.

12. Verfahren zur Bewegungsermittlung in einer Angelleine (4), umfassend Erzeugung eines elektrischen Spannungssignals, das proportional zu der Amplitude der Längsbewegung der Leine (4) ist, wobei die Längsbewegung der Leine (4) einen an die Leine (4) angeschlossenen Antrieb (3) veranlaßt, einem Rotor (9) eines elektrischen Generators (2), der mit der Angelrute verbunden ist, eine Drehbewegung zu erteilen und dadurch das elektrische Signal zu erzeugen; ferner umfassend Verstärkung der Spannung; Spannungssignalbearbeitung und Messung von Änderungen in der Amplitude der Spannung und in der Polarität der Spannung über die Zeit, welche Vibrationen in der Leine (4) anzeigen.

13. Verfahren zur Bewegungsermittlung nach Anspruch 12, umfassend das Erzeugen eines Alarmsignals.

14. Verfahren zur Bewegungsermittlung nach Anspruch 12, **dadurch gekennzeichnet, daß** der Antrieb (3) eine Rolle ist, die mit dem Rotor (9) eine gemeinsame Drehachse hat, und daß die Rolle infolge der Längsbewegung der Leine (4) rotiert, wodurch sich der Rotor (9) dreht, um dadurch das elektrische Signal zu erzeugen.

15. Verfahren zur Bewegungsermittlung nach Anspruch 12, **dadurch gekennzeichnet, daß** der Antrieb (3) ein Hebel ist, der ein Ende aufweist, das an dem Rotor (9) angebracht ist, und der ein anderes Ende hat, das an der Leine (4) befestigt ist, und daß der Hebel infolge der Längsbewegung der Leine (4) den Rotor (9) dreht, wodurch das elektrische Signal erzeugt wird.

16. Verfahren zur Bewegungsermittlung nach einem der Ansprüche 12 bis 15, **dadurch gekennzeichnet, daß** der elektrische Generator (2) ein Gleichstrommotor ist.

17. Verfahren nach Anspruch 16, **dadurch gekennzeichnet, daß** der Gleichstrommotor ein kernloser Gleichstrommotor ist.

18. Verfahren nach Anspruch 12, **dadurch gekennzeichnet, daß** zur Bearbeitung der Spannung gehört, daß festgestellt wird, wenn die Amplitude der Spannung über oder unter einem vorher eingestellten Grenzwert liegt.

19. Verfahren nach Anspruch 12, **dadurch gekennzeichnet, daß** zur Bearbeitung der Spannung das Messen der Polarität der Spannung gehört und dadurch die Bestimmung der Richtung der Längsbewegung der Leine (4).

20. Verfahren nach Anspruch 12, **dadurch gekennzeichnet, daß** zur Bearbeitung der Spannung das Messen der Spannungsamplitude und das Integrieren über die Zeit gehören und dadurch das Bestimmen der Entfernung der Bewegung der Leine in Längsrichtung.

## Revendications

1. Ensemble canne à pêche et ligne de pêche comprenant un mécanisme détecteur de touche (1) comprenant un actionneur (3) et un générateur électrique (2) comprenant un rotor (9), dans lequel, lors de l'utilisation, un mouvement longitudinal d'une ligne (4) amène l'actionneur (3) à imprimer un mouvement de rotation au rotor (9) et à générer ainsi un signal électrique proportionnel à l'amplitude du mouvement longitudinal de la ligne (4), le mécanisme (1) étant couplé à la canne et la ligne (4) étant fixée à ou supportée sur l'actionneur (3) et un poids de tension (6) étant disposé sur la ligne (4) et entre le mécanisme (1) et un moulinet (5).

2. Ensemble canne à pêche et ligne de pêche selon la revendication 1, dans lequel l'actionneur (3) est un rouleau ayant un axe de rotation commun avec le rotor (9).

3. Ensemble canne à pêche et ligne de pêche selon la revendication 1, dans lequel l'actionneur (3) est un levier ayant une extrémité fixée au rotor (9) et à une autre extrémité les moyens de fixation à la ligne (4).

4. Ensemble canne à pêche et ligne de pêche selon l'une quelconque des revendications précédentes, dans lequel le générateur électrique (2) comprend un moteur à courant continu.

5. Ensemble canne à pêche et ligne de pêche selon la revendication 4, dans lequel le moteur à courant continu comprend un moteur à courant continu sans noyau.

6. Ensemble canne à pêche et ligne de pêche selon l'une quelconque des revendications précédentes, dans lequel le signal est une tension.

7. Ensemble canne à pêche et ligne de pêche selon l'une quelconque des revendications précédentes, dans lequel le générateur électrique (2) est relié à une circuiterie électronique comprenant un étage d'amplification de signal et un étage de traitement de signal et le mécanisme (1) est en outre relié à un étage de génération d'alarme.

8. Ensemble canne à pêche et ligne de pêche selon la revendication 7, dans lequel l'étage de génération d'alarme comprend l'une quelconque ou plusieurs d'alarmes audible, visuelle ou à vibrations.

9. Ensemble canne à pêche et ligne de pêche selon l'une des revendications 7 ou 8, dans lequel la circuiterie électronique comprend un microprocesseur.

10. Ensemble canne à pêche et ligne de pêche selon l'une quelconque des revendications 7 à 9, dans lequel la circuiterie électronique comprend un émetteur pour émettre des informations de signal provenant de l'étage de traitement de signal vers un récepteur à distance.

11. Ensemble canne à pêche et ligne de pêche selon la revendication 10, dans lequel l'étage de génération d'alarme est à distance du mécanisme (1) et le mécanisme (1) est apte à être relié à l'étage de génération d'alarme par une communication sans fil.

12. Procédé de détection de mouvement d'une ligne de pêche (4) comprenant la génération d'un signal de tension électrique proportionnel à l'amplitude du mouvement longitudinal de la ligne (4), le mouvement longitudinal de la ligne (4) amenant un actionneur (3) relié à la ligne (4) à imprimer un mouvement de rotation à un rotor (9) d'un générateur électrique (2) relié à la canne et à ainsi générer le signal électrique ; l'amplification de la tension ; le traitement de signal de la tension et la mesure de changements dans l'amplitude de la tension et la polarité de tension au cours du temps qui sont indicateurs de vibrations sur la ligne (4).

13. Procédé de détection selon la revendication 12, comprenant la génération d'un signal d'alarme.

14. Procédé de détection selon la revendication 12, dans lequel l'actionneur (3) est un rouleau ayant un axe de rotation commun avec le rotor (9) et, en réponse au mouvement longitudinal de la ligne (4), le rouleau tourne, faisant ainsi tourner le rotor (9), générant ainsi le signal électrique.

15. Procédé de détection selon la revendication 12, dans lequel l'actionneur (3) est un levier ayant une extrémité fixée au rotor (9) et une autre extrémité fixée à la ligne (4) et, en réponse au mouvement longitudinal de la ligne (4), le levier fait tourner le rotor (9), générant ainsi le signal électrique.

16. Procédé de détection selon l'une quelconque des revendications 12 à 15, dans lequel le générateur électrique (2) est un moteur à courant continu.

17. Procédé selon la revendication 16, dans lequel le moteur à courant continu est un moteur à courant continu sans noyau.

18. Procédé selon la revendication 12, dans lequel le traitement de la tension comprend la détermination du point de savoir si l'amplitude de la tension est au-dessus ou au-dessous d'un niveau de seuil réglé prédéterminé.

19. Procédé selon la revendication 12, dans lequel le traitement de la tension comprend la mesure de la polarité de la tension et ainsi la détermination du sens du mouvement longitudinal de la ligne (4).

20. Procédé selon la revendication 12, dans lequel le traitement de la tension comprend la mesure de l'amplitude de la tension et l'intégration au cours du temps et ainsi la détermination de la distance d'un mouvement de ligne longitudinal.
